# EUROPEAN PATENT SPECIFICATION

(11) **EP 1 212 732 B1**
(45) Date of publication and mention of the grant of the patent: **21.01.2004**
(21) Application number: 00959619.8
(22) Date of filing: 30.08.2000
(51) Int. Cl.: G07F 7/10

(54) **METHODS AND APPARATUS FOR CONDUCTING ELECTRONIC TRANSACTIONS**
VERFAHREN UND VORRICHTUNG ZUM DURCHFÜHREN VON ELEKTRONISCHEN TRANSAKTIONEN
PROCEDES ET APPAREIL DE TRANSACTIONS ELECTRONIQUES

(30) Priority: 31.08.1999 US 151880 P; 09.11.1999 US 164668 P; 15.11.1999 US 165577 P; 03.05.2000 US 201635 P
(43) Date of publication of application: 12.06.2002
(73) Proprietor: AMERICAN EXPRESS TRAVEL RELATED SERVICES COMPANY, INC., New York, NY 10285 (US)
(72) Inventor: BENNETT, Russell, Cornville, AZ 86325 (US); BISHOP, Fred, Phoenix, AZ 85085 (US); GLAZER, Elliot, Chesterfield, VA 23838 (US); GORGOL, Zyg, Scottsdale, AZ 85258 (US); HOHLE, William, G., Lehi, UT 84043 (US); JOHNSTONE, David, Cave Creek, AZ 85331 (US); LAKE, Walter, D., Gilbert, AZ 85233 (US); SIMKIN, Marvin, - (US); SWIFT, Nick, Greater London RG30 2NN (GB); WHITE, Dirk, Temecula, CA 92591 (US); JOHNSON, Michael, Peoria, AZ 85345 (US); ROYER, Coby, University City, MO 63130 (US)
(74) Representative: McNally, Roisin
(86) International application number: PCT/US2000/023817
(87) International publication number: WO 2001/016900

(56) References cited:
- EP-A- 0 917 120
- EP-A- 0 927 945
- EP-A- 1 017 030
- WO-A-98/21683
- WO-A-98/45778
- WO-A-99/21321
- DE-C- 4 339 460
- US-A- 5 534 857
- US-A- 5 832 212

## Description

### FIELD OF THE INVENTION

The invention relates generally to methods and apparatus for conducting network transactions. More particularly, the invention relates to systems for authenticating and conducting business over data networks such as the Internet.

### BACKGROUND OF THE INVENTION

In recent years, many consumers have discovered the convenience and economy of purchasing goods and services electronically. A number of channels for electronic purchases (commonly called "e-purchases") are available, including shop-at-home television networks, call-in responses to television advertisements, and the like. Most recently, direct purchasing via the Internet has become extremely popular.

In a typical Internet transaction, a consumer generally identifies goods and/or services for purchase by viewing an online advertisement such as a hypertext markup language (HTML) document provided via a World Wide Web (WWW) browser. Payment typically occurs via a charge card number that is provided via a secure channel such as a secure sockets layer (SSL) connection that is established between the consumer and the merchant. A charge card account number is typically a sixteen-digit credit card number. Credit card numbers typically comply with a standardized format having four spaced sets of numbers, as represented by the number "0000 0000 0000 0000". The first five to seven digits are reserved for processing purposes and identify the issuing bank, card type, etc. The last sixteenth digit is used as a sum check for the sixteen-digit number. The intermediary eight-to-ten digits are used to uniquely identify the customer. The merchant then processes the charge card number by, for example, receiving direct authorization from the card issuer, then the merchant completes the transaction. The SSL standard is described by, for example, "The SSL Protocol Version 3.0" dated November 18, 1996 which is available online at http://home.netscape.com/eng/ssl3/draft302.txt.

Although millions of transactions take place every day via the Internet, conventional SSL transactions often exhibit a number of marked disadvantages. Although SSL typically provides a secure end-to-end connection that prevents unscrupulous third parties from eavesdroppinq (e.g., "sniffing") or otherwise obtaining a purchaser's charge card number, the protocol does not provide any means for ensuring that the charge card number itself is valid, or that the person providing the card number is legally authorized to do so. Because of the high incidence of fraud in Internet transactions, most charge card issuers consider network transactions to be "Card Not Present" transactions subject to a higher discount rate. Stated another way, because of the increased risk from "Card Not Present" transactions, most charge card issuers charge the merchant a higher rate for accepting card numbers via electronic means than would be charged if the card were physically presented to the merchant.

To improve the security deficiencies inherent in transporting charge card numbers over unsecure networks, many have suggested the use of "smart cards". Smart cards typically include an integrated circuit chip having a microprocessor and memory for storing data directly on the card. The data can correspond to a cryptographic key, for example, or to an electronic purse that maintains an electronic value of currency. Many smartcard schemes have been suggested in the prior art, but these typically exhibit a marked disadvantage in that they are non-standard. In other words, merchants typically must obtain new, proprietary software for their Web storefronts to accept smartcard transactions. Moreover, the administration costs involved with assigning and maintaining the cryptographic information associated with smart cards have been excessive to date.

The Secure Electronic Transaction (SET) standard has been suggested to improve the security of Internet transactions through the use of various cryptographic techniques. Although SET does provide improved security over standard SSL transactions, the administration involved with the various public and private keys required to conduct transactions has limited SET's widespread acceptance. SET also requires special software for those merchants wishing to support SET transactions.

Existing digital wallet technology, such as the digital wallet technology provided by, for example, GlobeSet, Inc., 1250 Capital of Texas Highway South, Building One, Suite 300, Austin, TX, 78746, provides a means for customers to utilize transaction card products (e.g., credit, charge, debit, smart cards, account numbers and the like) to pay for products and services on-line. In general, digital wallets are tools which store personal information (name, address, chargecard number, credit card number, etc.) in order to facilitate electronic commerce or other network interactions. The personal information can be stored on a general server or at a client location (PC or Smartcard) or on a hybrid of both a general server and a client server. The digital wallet general server is comprised of a Web server and a database server which centrally houses the customer's personal and credit card information, shopping preferences and profiles of on-line merchants.

A digital wallet preferably performs functions such a single sign on/one password, automatic form filling of check out pages, one- or two-click purchasing, personalization of Websites, on-line order and delivery tracking, itemized electronic receipts, and customized offers and promotions based upon spending patterns and optins. More particularly, a one-click purchase activates the wallet and confirms the purchase at the same time. A two-click check out first activates the wallet, then the second click confirms the purchase.

In use, the wallet bookmark is typically clicked by the customer and an SSL session is established with the Wallet server. A browser plug-in is executed and the customer supplies and ID/password or smartcard for authentication in order to gain access to the wallet data. When shopping at an on-line merchant, the appropriate wallet data is transferred from the wallet server to the merchant's Web server.

US-A-5,534,857 (BOWCOCK, MATTHEW P et al), 9 July 1996, discloses a method and apparatus for securely writing confidential data from an issuer to a customer smart card, without any possibility of providing credentials to a user for providing access to a service after being authenticated via a challenge-response.

US-A-5,832,212 (CRAGUN, BRIAN JOHN et al), 3 November 1998, discloses a censoring browser for internet viewing, without a remote process of scanning for particular characters.

EP-A-0,917,120 (CITICORP DEV CENTER INC), 19 May 1999, discloses a digital wallet client for facilitating electronic transactions via a digital network in conjunction with a browser program.

A new system of conducting electronic translations is therefore desired. Such a system should provide improved security without additional overhead for customers and merchants. Moreover, such a new system should integrate well with various Internet wallets and other services provided by various vendors.

### SUMMARY OF THE INVENTION

According to an aspect of the present invention, there is provided a method for conducting a transaction as defined in claim 1.

According to another aspect of the present invention, there is provided a transaction system for facilitating a financial transaction requested by a user operating a user computer on a data network as defined in claim 5.

According to another aspect of the present invention, there is provided a computer implemented invention as defined in claim 17.

Also described herein is a computer-implemented method for protecting a network server from being used as the basis of an attack on a network client, the method comprising:
a. receiving a request for a connection at said server from said network client; and
b. scanning a portion of said network server for particular characters associated with a protocol;
c. verifying that any response from said network server to said network client is void of said particular characters; and
d. providing said response from said network server to said network client.

The method may further comprise restricting access to said network server for said protocol to said portion of said network server. Said particular characters can be replaced with benign characters such that a security risk posed by said selected protocol is reduced and, optionally, said particular characters may be logged to form a security log. Said security log may be reviewed to determine whether said particular characters are hostile.

In one embodiment, said protocol comprises javascript.

This method can be used in protection of the network server during an electronic purchase transaction, for example where the electronic purchase transaction is conducted using a digital wallet.

Also described herein is a digital wallet client for facilitating electronic transactions via a digital network in conjunction with a browser program, the digital wallet client comprising:
a. a wallet application configured to initiate a session with a wallet server via said digital network in response to inputs from a user; and
b. an interface to a reader device, wherein said reader device is configured to accept a token to verify the identity of said user; and
wherein said wallet application is operable to authenticate said user to said wallet server using said token and to contact said wallet server via said digital network to consummate said electronic transactions.

The digital wallet may further comprise an activator for accessing said wallet server, wherein said activator exchanges information with said wallet server to complete said electronic transactions.

The digital wallet application can be further configured to authenticate said user to said wallet server based at least in part upon a credential received at said digital wallet client from a security server on said digital network.

The activator of said digital wallet client may comprise a status indicator displayed to said user, said status indicator corresponding to the availability of wallet services for a web page.

The wallet application may be further configured to obtain a digital signature from said token and to provide said digital signature to said wallet server via said digital network.

Also described is a wallet server for facilitating a transaction via a digital network, the wallet server comprising:
a. an interface to a digital network; and
b. a wallet server application in communication with a database, wherein said wallet server is configured to receive a request for a transaction from a wallet client, to process a credential received from said wallet client to authenticate a user of said wallet client, to retrieve user information from said database after authenticating said user, and to complete said transaction on behalf of said user using said user information.

Said credential may comprise a digital signature. Said credential may further comprise a random digest digitally signed by a token in the possession of said user.

The digest can be provided to said wallet client by a security server.

In such an embodiment, completing said transaction on behalf of said user typically comprises completing a merchant form with said user information.

Also described is a computer-implemented method for facilitating an online purchase comprising the steps of:
authenticating with a security server;
receiving a credential from said security server;
identifying a merchant address from which to make said purchase;
providing said credential to a wallet server to authenticate said user to said wallet server;
upon successful authentication with said wallet server, re-directing
communications with said merchant address to said wallet server such that said
wallet server provides purchase information about said user to said merchant address; and
receiving a confirmation of the results of said purchase.

Further described herein is a computer-implemented method for facilitating an online purchase comprising the steps of:
receiving a request for a transaction from a user at a server, said request comprising a merchant address and a credential;
verifying said credential to authenticate said user;
retrieving user information from a database in response to said verifying step;
completing an online form corresponding to said merchant address; and providing a purchase result to said user.

Said credential may comprise a digital signature. Said credential may further comprise data received from a security server.

In one embodiment, said security server is affiliated with said server.

The digital signature can be produced by a smartcard.

In exemplary embodiments of the invention, a user is provided with an intelligent token, such as a smartcard, which can be used in conducting electronic transactions. The intelligent token contains a digital certificate and suitably authenticates with a server on the network that conducts all or portions of the transaction on behalf of the user. The user is a purchaser conducting a purchase transaction and the server is a wallet server that interacts with a security server to provide enhanced reliability and confidence in the transaction.

Electronic transactions, such as purchase transactions, are conducted by:
receiving a transaction request from a user at a server: issuing a challenge to the user;
receiving a response from the user based upon the challenge; processing the response to verify a transaction instrument; assembling credentials which include at least one key
for the electronic transaction; providing at least a portion of the credentials to the user;
receiving a second request from the user which includes the portion of the credentials; and validating the portion of the credentials with the key to provide access to a transaction service.

Moreover, the present invention protects a network server from an attack by: restricting access to the network server to a portion of the network server for at least a selected protocol and scanning the portion of the network server for particular characters associated with the selected protocol. The particular characters may be removed or replaced with benign characters in order to reduce the security risk posed by the selected protocol. Preferably, the characters can be logged in order to form a security log. The security log can be reviewed to determine whether the particular characters are hostile. Alternatively, a request may be denied.

The present invention also includes a transaction tool, such as a digital wallet used to perform purchase transactions, having an activator and a toolbar. Preferably, the toolbar allows a user to perform a small download of the activator and the toolbar utilizes one or more operating system controls, for example, a system tray icon. The transaction tool also includes a form fill component and an auto remember component for pre-filling forms with information previously provided by the user.

### BRIEF DESCRIPTION OF THE DRAWINGS

The above and other features and advantages of the present invention are hereinafter described in the following detailed description of exemplary embodiments to be read in conjunction with the accompanying drawing figures, wherein like reference numerals are used to identify the same or similar parts in the similar views, and:
**Figures 1A-1C** are block diagrams of various embodiments of an exemplary transaction system;
**Figure 2** is a block diagram of an exemplary purchaser system;
**Figure 3** is a block diagram of an exemplary security system;
**Figure 4** is a block diagram of an exemplary wallet server;
**Figures 5-8** are exemplary screen displays for an embodiment of a digital wallet formed in accordance with the present invention;
**Figure 9** is a flow diagram of an exemplary process executed by an exemplary activator application;
**Figure 10** is a message sequence chart of an exemplary login sequence;
**Figure 11** is a message sequence chart of an exemplary purchase sequence;
**Figure 12A** is a message sequence chart illustrating a potential security problem encountered with many scripting languages;
**Figure 12B** is a message sequence chart of a correct communications flow without the security problems shown in **Figure 12A;** and
**Figure 13** is a flow diagram of an exemplary process for reducing or eliminating undesired executable code.

### DETAILED DESCRIPTION OF PREFERRED EXEMPLARY EMBODIMENTS

The present invention may be described herein in terms of functional block components and various processing steps. It should be appreciated that such functional blocks may be realized by any number of hardware and/or software components configured to perform the specified functions. For example, the present invention may employ various integrated circuit (I.C.) components, e.g., memory elements, processing elements, logic elements, look-up tables, and the like, which may carry out a variety of functions under the control of one or more microprocessors or other control devices. Similarly, the software elements of the present invention may be implemented with any programming or scripting language such as C, C++, Java, COBOL, assembler, PERL, or the like, with the various algorithms being implemented with any combination of data structures, objects, processes, routines or other programming elements. Further, it should be noted that the present invention may employ any number of conventional techniques for data transmission, signaling, data processing, network control, and the like. Still further, the invention could be used to detect or prevent security issues with a scripting language, such as JavaScript, VBScript or the like.

It should be appreciated that the particular implementations shown and described herein are illustrative of the invention and its best mode and are not intended to otherwise limit the scope of the present invention in any way. Indeed, for the sake of brevity, conventional data networking, application development and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical electronic transaction system.

To simplify the description of the exemplary embodiments, the invention is frequently described as pertaining to a system of electronic commerce running over the internet. It will be appreciated, however, that many applications of the present invention could be formulated. For example, the system could be used to authenticate users of a computer system, or to activate a passcode system, or any other purpose. Similarly, the invention could be used in conjunction with any type of personal computer, network computer, workstation, minicomputer, mainframe, or the like running any operating system such as any version of Windows, Windows NT, Windows2000, Windows 98, Windows 95, MacOS, OS/2, BeOS, Linux, UNIX, or the like. Moreover, although the invention is frequently described herein as being implemented with TCP/IP communications protocols, it will be readily understood that the invention could also be implemented using IPX, Appletalk, IP-6, NetBIOS, OSI or any number of existing or future protocols.

Furthermore, the customer and merchant may represent individual people, entities, or business while the bank may represent other types of card issuing institutions, such as credit card companies, card sponsoring companies, or third party issuers under contract with financial institutions. The payment network includes existing proprietary networks that presently accommodate transactions for credit cards, debit cards, and other types of financial/banking cards. The payment network is a closed network that is assumed to be secure from eavesdroppers such as the American Express® network, VisaNet® network or Veriphone®.

Additionally, other participants may be involved in some phases of the transaction, such as an intermediary settlement institution, but these participants are not shown. Each participant is equipped with a computing system to facilitate transactions. The customer has a personal computer, the merchant has a computer/server, and the bank has a main frame computer; however, any of the computers may be a mini-computer, a PC server, a network set of computers, laptops, notebooks, hand held computers, set-top boxes, and the like.

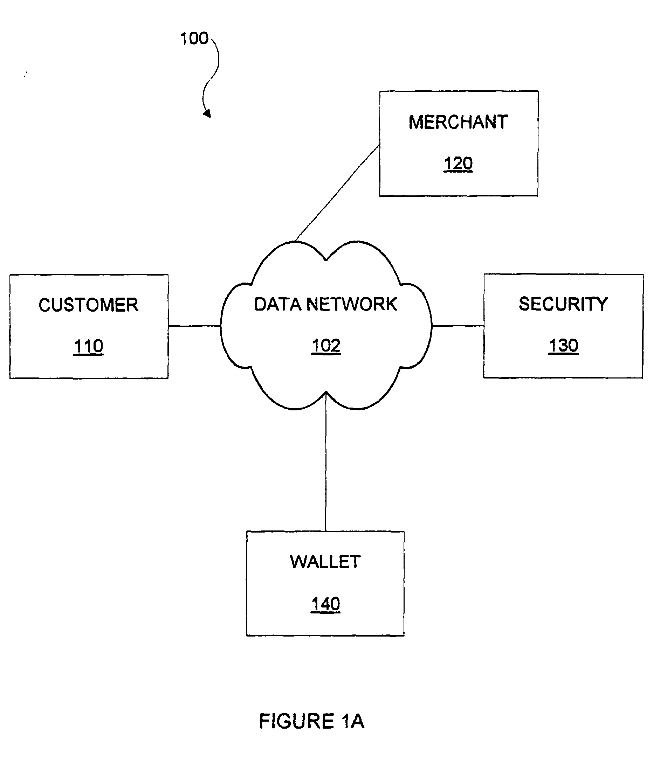

Referring now to **Figure 1A,** a transaction system 100 suitably includes at least one user computer 110, a transaction authorizer computer 120, a security server 130 and an optional transaction tool server 140. In various embodiments described in detail herein, the transaction system 100 is used in electronic commerce to conduct purchase transactions. Specifically, the user computer 110 is a purchaser or customer computer, the transaction authorizer computer 120 is a merchant computer and the transaction tool server 140 is a digital wallet server. It will be appreciated that although the transaction system described herein is an electronic commerce system, the present invention is equally applicable to various other electronic transaction systems.

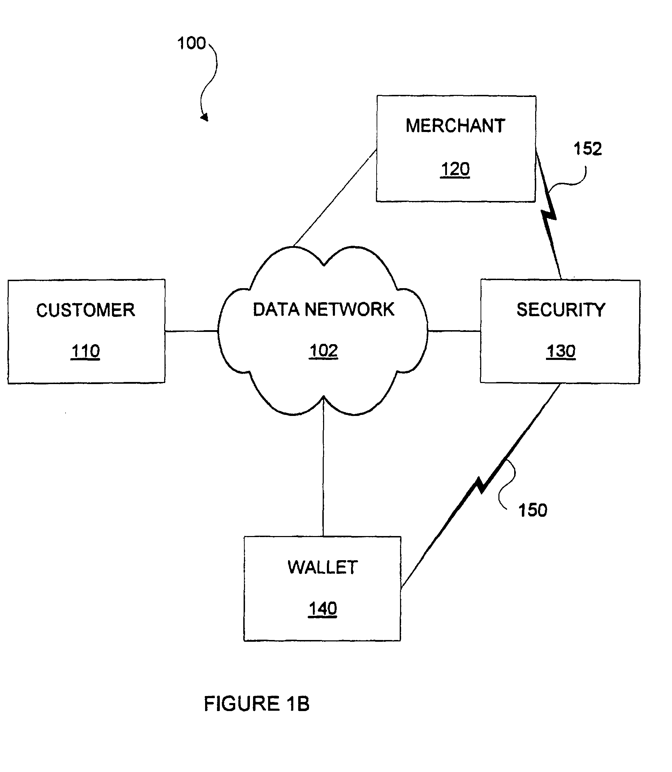

The various computer systems and servers are interconnected as appropriate by a data network 102, which is any data network such as the internet or another public data network. Other suitable networks 102 include the public switched telephone network (PSTN), corporate or university intranets, and the like. In various embodiments, such as the one shown in **Figure 1B,** merchant computer 120 is electronically coupled to security server 130 through a data connection 152 separate from network 102. Similarly, various embodiments include a connection 150 separate from network 102 connecting the wallet server 140 and security server 130. Exemplary data connections suitable for use with connections 150 and 152 include telephone connections, ISDN connections, dedicated T1 or other data connections, wireless connections and the like. It will be appreciated that connection 150 and connection 152 may be identical connections, or each may be an entirely different form of connection in various embodiments of the invention.

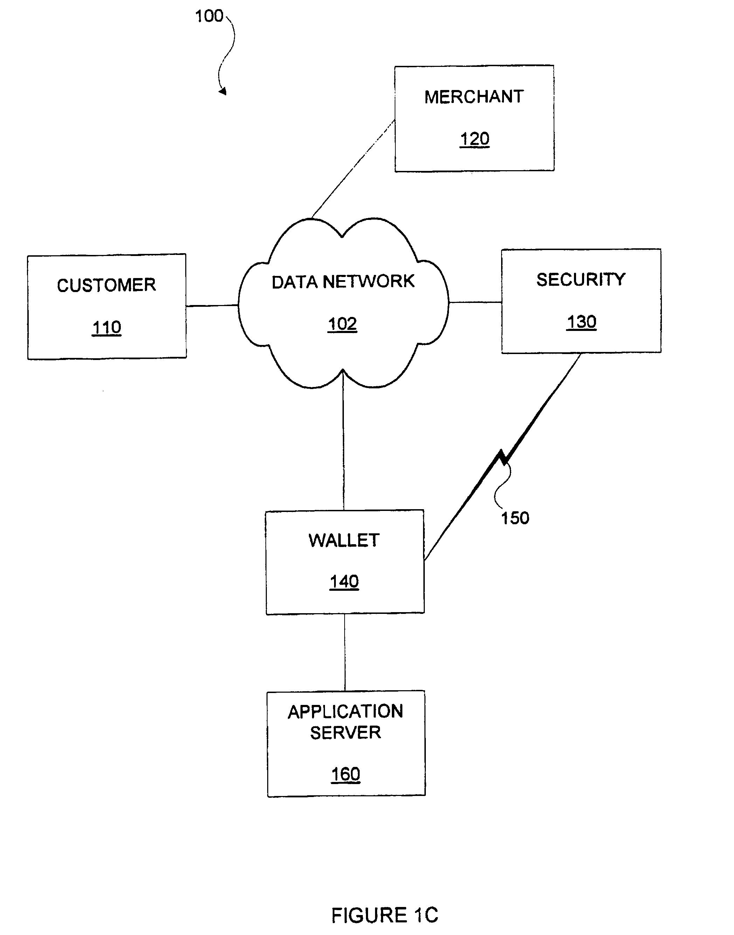

Various embodiments, such as the one shown in **Figure 1C**, also include an application server 160. In various embodiments, databases (not shown) and/or profile servers (not shown) may be connected to application server 160 and/or wallet server 140. Application server 160 can be used to balance the workload. Spreading the workload between digital wallet 140 and application server 160 can enhance efficiency and/or security. For example, application server 160 may perform some of the functionality performed by the Wallet server 140, such as database access. Because the application server 160 is not connected to the data network 102, security may be enhanced by having database access be performed by the application server 160 instead of the wallet server 140.

While various exemplary embodiments have been illustrated in **Figures 1A-1C**, it will be appreciated that other embodiments are possible. For example, an embodiment may include connection 150 but not connection 152 or vice versa. Furthermore, components (e.g., customer 110, merchant 120, security server 130, wallet server 140 and application server 160) may be individual computers or networked groups of computers acting with similar purpose to fulfill the functions described herein. Functionality attributed to a single component may be distributed among one or more individual computers in order to fulfill the described functionality. For example, the wallet server 140, may in fact be a collection of Web servers, application servers, database servers and other types of servers.

To conduct a transaction, customer 110 suitably establishes a connection through network 102 with a merchant 120. When a purchase is to be consummated, customer 110 accesses wallet server 140. The customer 110 is then redirected to security server 130 to verify that a smartcard is in the customer's possession. The smartcard may include a digital certificate that uniquely identifies the card such that digital credentials relating to the transaction may be created, as described below. In various embodiments, portions of the digital credentials are returned to customer 110 and a portion is provided to wallet server 140 via secure connection 150. Customer 110 may then use the digital credentials to authenticate to a wallet server 140, which may complete the electronic transaction as a proxy for customer 110. Wallet server 140 may include functionality for completing purchase forms affiliated with merchant computer 120, for example. When merchant 120 receives a secure purchase instrument identifier from customer 110 or from wallet server 140, card authorization may take place over connection 152 as with any ordinary charge card authorization. As described above, the communications can be performed using various protocols, for example SSL or VPN and the like. Because the smartcard contains identifying information that is unique to the particular card and which can be made known to the network through electronic means, a purchase transaction conducted with the smartcard is more secure than a transaction conducted with an ordinary charge or credit card. A lower discount rate may be justified for the secure transaction, which may be processed by the card issuer as a "Card Present" transaction. Additionally, if the transaction is a "Card Present" transaction, the risk of fraud may be transferred from the merchant to the card issuer.

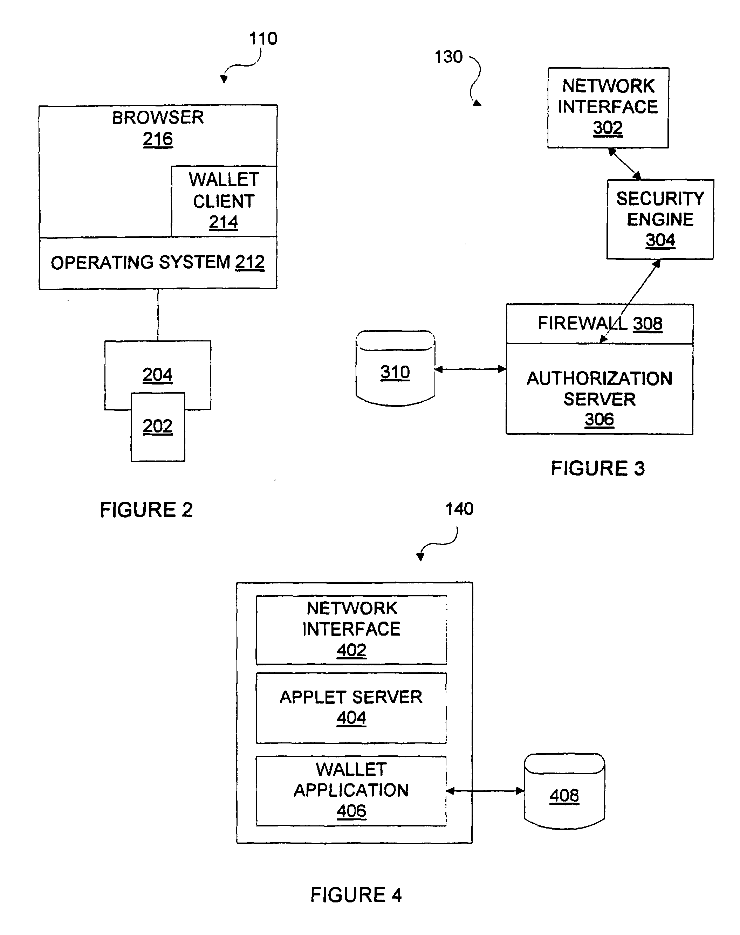

With reference now to **Figure 2,** an exemplary purchaser computer 110 (also referred to as a client, customer, or user computer) is any computer system that is capable of initiating an electronic purchase transaction on data network 102. In various embodiments, purchaser computer 110 is a personal computer running any operating system 212 such as any version of the Windows operating system available from the Microsoft Corporation of Redmond, Washington or any version of the MacOS operating system available from the Apple Corporation of Cupertino, California.

Purchaser computer 110 suitably includes hardware and/or software to allow a smartcard 202 to interface with a Web browser 216 through operating system 212. Web browser 216 is any program compatible with purchaser computer 110 that communicates via network 102 such as Netscape Communicator available from the Netscape Corporation of Mountain View, California, Internet Explorer available from the Microsoft Corporation of Redmond, Washington, or the AOL Browser available from the America Online Corporation of Dulles, Virginia. In various embodiments, purchaser computer 110 includes a wallet client 214, which is any computer program configured to communicate with wallet server 140. An exemplary wallet client 214 is the Microsoft Wallet, or the Globeset Wallet available from the Globeset Corporation of Austin, Texas, although any wallet program could be used.

Wallet client 214 and browser 216 may interact with smartcard 202 by sending data through operating system 212 to a card reader 204. Card reader 204 is any reader device capable of transferring information between wallet client 214 and smartcard 202. In various embodiments, card reader 204 is an ISO-7816 compatible reader such as the Model GCR410 available from the Gemplus Corporation of Redwood City, California, or any other suitable reader.

Smartcard 202 is any card that is capable of conducting electronic transactions, such as any smartcard that is compatible with the following ISO standards:
ISO/IEC 7816-1:1998 Identification cards - Integrated circuit(s) cards with contacts - Part 1: Physical characteristics;
ISO/IEC-7816-2:1999 Information technology - Identification cards-Integrated circuit(s) cards with contacts -- Part 2: Dimensions and location of the contacts;
ISO/IEC 7816-3:1997 Information technology - Identification cards-Integrated circuit(s) cards with contacts - Part 3: Electronic signals and transmission protocols;
ISO/IEC 7816-4:1995 Information technology - Identification cards-Integrated circuit(s) cards with contacts - Part 4: Interindustry commands for interchange;
ISO/IEC 7816-5:1994 Identification cards -- Integrated circuit(s) cards with contacts - Part 5: Numbering system and registration procedure for application identifiers;
ISO/IEC 7816-6:1996 Identification cards -- integrated circuit(s) cards with contacts - Part 6: Interindustry data elements; and
ISO/IEC 7816-7:1999 Identification cards -- Integrated circuit(s) cards with contacts - Part 7: Interindustry commands for Structured Card Query Language (SCQL).

An exemplary smartcard 202 is a smartcard in accordance with the ISO 7816 specifications including a model SLE66 chip available from the Infineon Corporation of Munich, Germany. The SLE66 chip includes a memory (such as a 16k memory, although more or less memory could be used) and a processor running, for example, the Multos operating system (such as Multos v.4). In various embodiments smartcard 202 also includes an applet for storing and processing digital certificates or other cryptographic functions. For a basic introduction of cryptography, see "Applied Cryptography: Protocols, Algorthms, And Source Code In C," by Bruce Schneier and published by John Wiley & Sons (second edition, 1996).

For example, an X.509 Java applet could be included on smartcard 202 for processing an X.509 certificate stored thereon. While the embodiments described herein utilize a smartcard, it will be appreciated that other intelligent tokens, for example a global system for mobile communication (GSM) mobile phone, can be substituted for the smartcard in various embodiments of the invention.

With reference now to **Figure 3**, a security server 130 suitably includes an interface to network 102, a security engine 304 and an authorization server 306 communicating with a database 310. Network interface 302 is any program that facilitates communications on network 102, such as a Web server. In various embodiments, network interface 302 is based upon Netscape Enterprise Server, available from the Netscape Corporation of Mountain View, California. Network interface 302 receives electronic messages on network 102 and routes them to security engine 304 or authorization server 306 as appropriate.

Security engine 304 and authorization server 306 may be separated by a firewall 308. Firewall 308 is any hardware or software control (such as a router access control) capable of restricting data flow between an internal and an external network (not shown). In various embodiments, security engine 304 suitably resides outside the firewall to administer data transfers between the security server 130 and the customer 110 or wallet server 140. Authorization server 306 retains valuable confidential information such as database 310, which may contain a cross-reference of x.509 certificates stored on the various smartcards 202 associated with the system 100, so it may be suitably maintained on an internal network for enhanced security. It will be understood that the functionality of security engine 304 and authorization server 306 may be suitably combined or separated in various ways without departing from the scope of the present invention.

With reference now to **Figure 4**, an exemplary wallet server 140 includes a network interface 402, an optional applet server 404 and a wallet application 406. Network interface 402 is any program that facilitates communications on network 102, such as a Web server. In various embodiments, network interface 402 is based upon Netscape Enterprise Server, available from the Netscape Corporation of Mountain View, California. Optional applet server 404 provides server functionality for distributed programs such as Java programs or ActiveX controls. An exemplary applet server is the Java Applet Server available from Sun Microsystems of Mountain View, California. Applet server 404 and network interface 402 provide support functionality for wallet application 406, which may handle login functionality, retrieve wallet data from wallet database 408, and/or administer transactions as described herein. In various embodiments of the invention, wallet server 140 may include the SERVERWALLET (a.k.a. NETWALLET) program available from the Globeset Corporation of Austin, Texas.

Various embodiments of the invention may include an activator application that suitably helps consumers with the wallet purchase process. The activator application may present status information, for example, or may actively launch the wallet client 214 (Fig. 2) when appropriate. Additionally, the activator may maintain a local cache of sites supported by the wallet.

The activator application program may be implemented as a conventional computer application. In various embodiments, the activator application displays information as a system tray icon, as a "floating bitmap", or in any other suitable manner. The graphical representations (e.g., icons) may indicate status information such as "browsing at a supported site", "browsing at a supported checkout page", "browsing at a supported payment page", "no browser windows open", "browsing at an unsupported page", and/or the like.

A floating bitmap may be implemented with any graphical file or format, for example, a graphics interchange format (GIF) file. Alternate embodiments present information in graphical, audio, visual, audiovisual, multimedia, animated or other formats. Moreover, GIF files may be replaced with LZW files, TIFF files, animated GIF files, JPEG files, MPEG files, or any other sort of graphical, audio or multimedia format or file.

Preferably, the present invention is enhanced by providing a transaction tool with a window which includes controls which allow a user to more easily use the transaction tool. The transaction tool can be used for various electronic transactions. For example, purchase transactions, financial advisory transactions, insurance transactions, consumer-to-consumer transactions, such as barter transactions, transactions relating to offers and rewards, etc. The transaction tool described in detail herein is a digital wallet used for electronic purchase transactions. The digital wallet is enhanced by providing a window with controls for the customer to more easily use the wallet. Preferably, the present invention includes a client-side implementation for accessing digital wallet functionality ("activator") and a server-side toolbar, that allows the user to perform a small download of the activator and utilize one or more control elements of the Operating System User interface, for example, a Microsoft Windows system tray icon.

The activator is object code that runs on the user's computer and contains routines for accessing the wallet server. The activator can generate events and the activator contains procedural logic which allows for communication with the wallet server in response to specific user and system actions or events. Preferably, the activator presents a single graphical element, for example an icon which in a Microsoft Windows embodiment appears as a Windows system tray icon, and which enables the user to trigger the appearance of the wallet toolbar. In various embodiments, the wallet toolbar is, in effect, a special browser window that accesses the wallet server. The activator communicates with the wallet server to automate the update of the activator object code, via a small download. Preferably, the user is queried for a confirmation prior to performing the activator download. In various embodiments, the activator communicates with applications other than the wallet, for example, offers of rewards.

The system provides the content of relevant options on each of its web pages, namely dynamic and contextual information that is specific to each page viewed by the user. This is accomplished by the activator monitoring URLs and potentially keying on pages so that the user can be made aware of potential opportunities. For example, the activator can check to see if the user is viewing a merchant site and present applicable offers (e.g., discount on merchandise, etc.) to the user. The activator can also monitor versions of software on the user's system and inform the user of possible upgrade versions. In an exemplary embodiment, the system is implemented on any network, such as a WAN, LAN, Internet, or on any personal computer, wireless electronic device or any other similar device. The system can be implemented on an operating system, for example Microsoft Windows, Mac OS, Linux, Windows CE, Palm OS, and others.

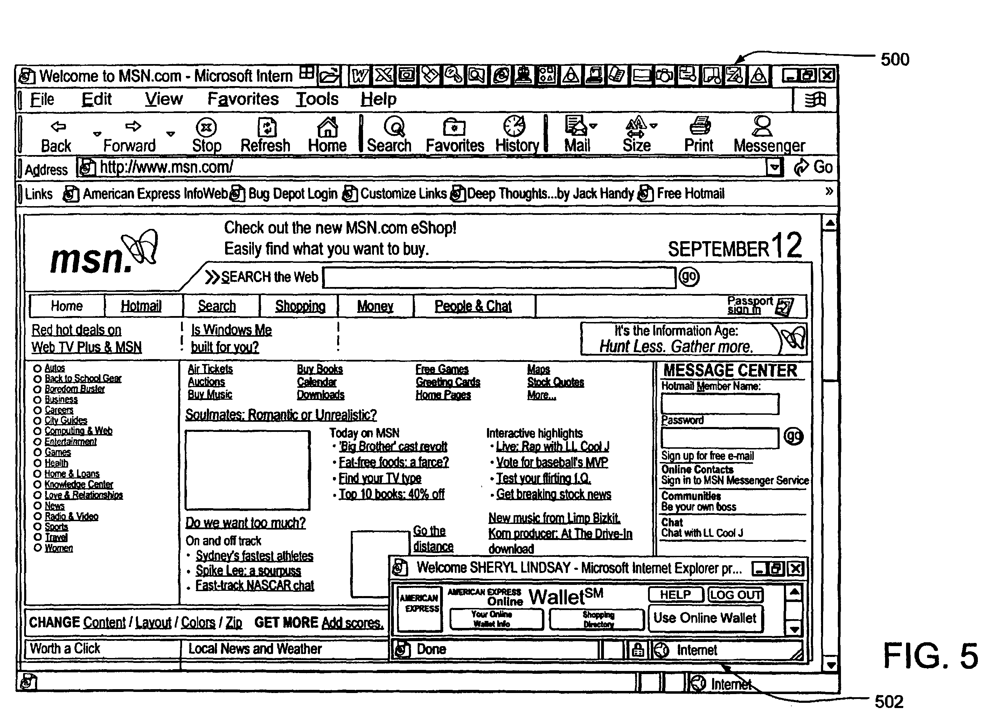

The activator, which is preferably implemented on the client side, allows the user 110 to be in constant or intermittent communication with the digital wallet 140 issuer, for example, American Express, without having to have intrusive windows taking up space on the user's display. As described above, this allows the wallet issuer to monitor and present possible items of interest to the user at appropriate times. The configurable controls presented in the window allow the customer to quickly navigate to desired Web sites, and to immediately invoke desired functionality such as digital shopping cart checkout. Preferably, the client toolbar may be a discrete window that associates with the user's browser window, and maintains a geometry that effectively renders it a part of the user's browser. Although when the user clicks on its controls, the window remains in its original state, namely the window directs the browser window to visit desired URLs and invoke specific actions (such as, use of the digital wallet). For example, after selecting a digital wallet icon from the system tray, the digital wallet toolbar 502 is displayed as a discrete window that is associated with the user's browser window 500 as shown in **Figure 5.** In an alternative embodiment, the client toolbar frames the existing wallet window, providing the additional controls as described above in an extension of the window area which is provided by an existing wallet. In another alternative embodiment, the area is divided in the user's standard browser window to create an area that can be used for wallet and the other controls described above.

The system preferably provides a convenient way for customers to not only visit favorite URLs, but also to invoke specific functionality that might otherwise incur many steps, and which might change as the vendors' sites are continually updated. The system also preferably provides a simpler user experience by making the wallet and e-commerce sites not only easy to use, but by making the wallet and client toolbar easy to find. When a user has many different windows open, finding the wallet window can be difficult and annoying, especially as different browser windows seize GUI focus during the course of normal navigation and interaction with sites. As such, use of the system tray icon and server side functionality provides a superior user experience. In a preferred embodiment, the present system works with any known in the art browser, such as Netscape Navigator.

While prior art systems may simply provide a customizable portal (e.g., MyAmericanExpress.com) that allows a user to visit the page and then traverse links from that page, an exemplary embodiment of the present invention suitably provides a window with controls that will stay on the users' desktop as they navigate throughout the Web. Additionally, the client toolbar provides a means of automating actions for the user, where these actions take place on third party e-commerce sites. Moreover, prior art systems may utilize a separate browser window to render the wallet controls, but the present invention utilizes a standard browser window which has been divided to provide an area for the wallet to occupy. For example, in a preferred embodiment, a digital wallet icon is available to the user as a system tray icon (not shown). Upon invocation of the digital wallet icon, the digital wallet toolbar 502 is displayed as shown in **Figure 5**. The digital wallet toolbar is unobtrusive while including controls which allow the user to utilize the digital wallet. Preferably, the toolbar 502 is associated with the browser window 500.

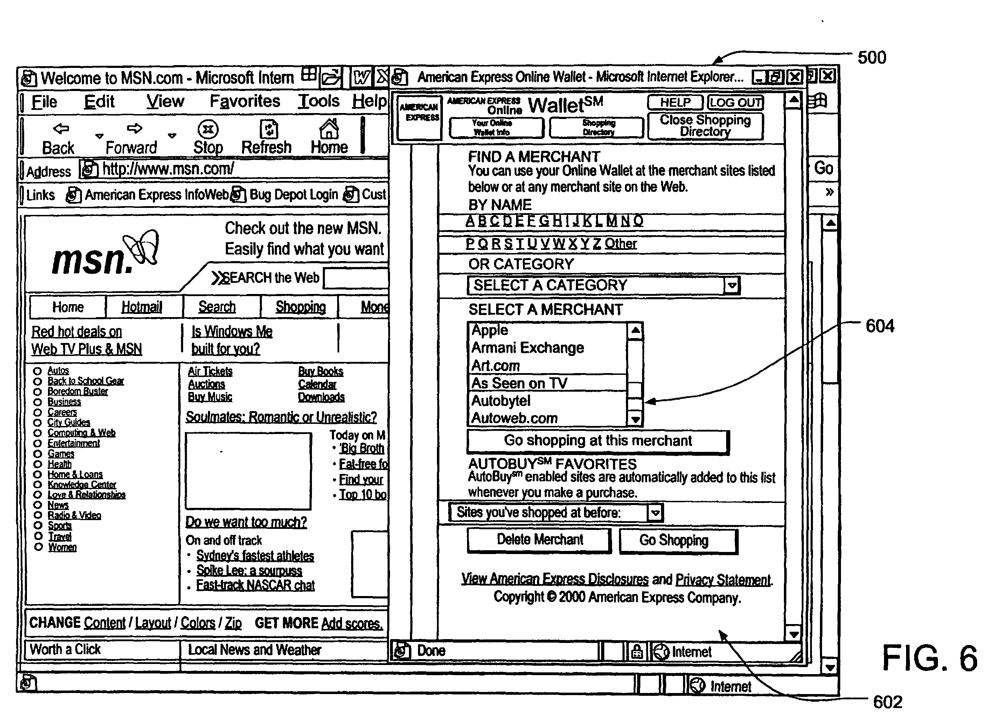

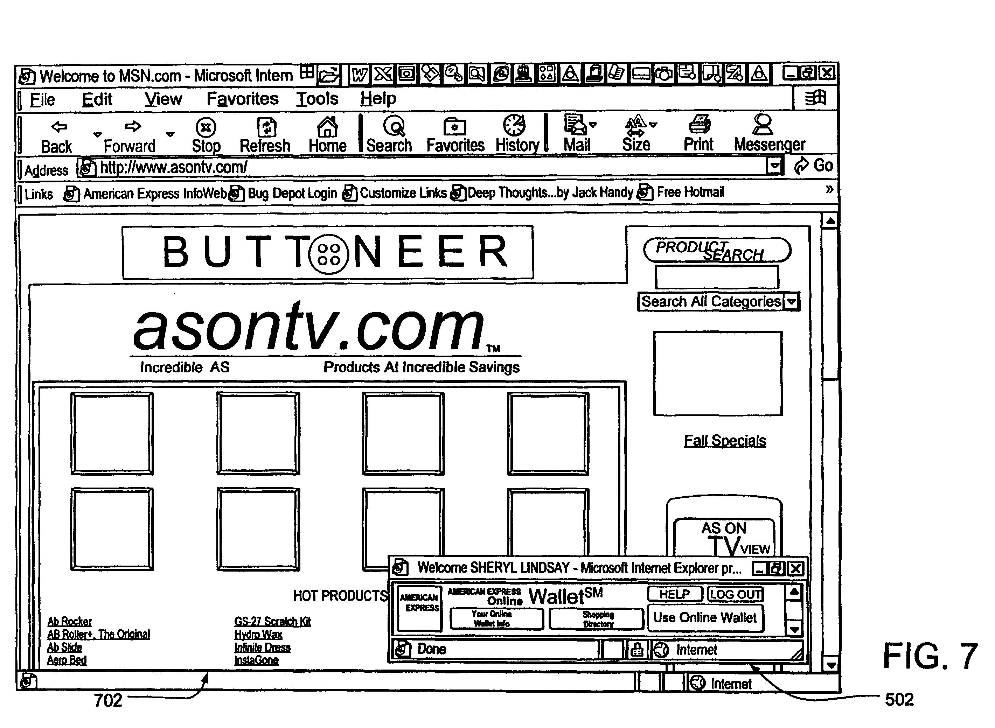

As shown in **Figure 6**, if the user selects a shopping directory button from the toolbar 502, the toolbar expands to a shopping directory page 602. The user can select a merchant from the list of merchants 604 displayed in the shopping directory page 602. Upon selecting a merchant from the list of merchants 604, the digital wallet takes the user to the selected merchant site 702, such as is shown in **Figure 7**. Preferably, when the digital wallet takes a user to a merchant site 702, the toolbar 502 returns to its normal size.

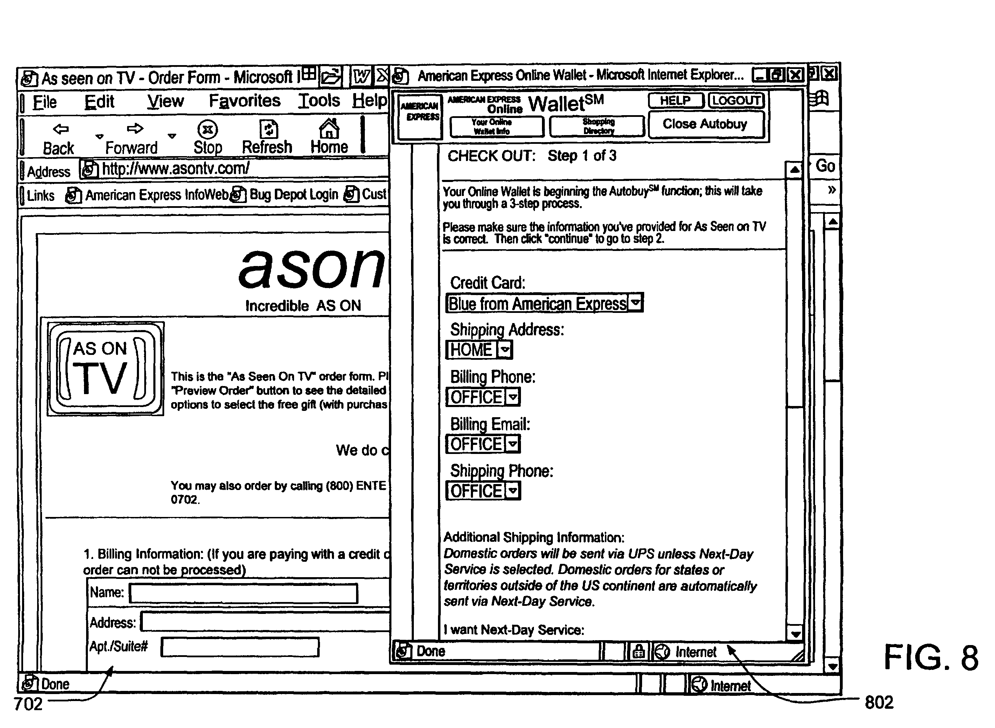

When the user makes a purchase from a merchant, for example by placing items in a shopping cart and proceeding to checkout at the merchant's site, the checkout function is performed, in part, by the digital wallet of the present invention. As shown in **Figure 8**, when the user indicates a desired purchase at a merchant site 702, the checkout user interface 802 of the digital wallet is displayed. For example, the checkout display 802 appears in one side of the browser window, while the merchant window 702 is still displayed on the opposite side of the browser window. Much of the information that a user would normally have to enter at the merchant checkout (for example, name, address, e-mail address, credit card information, etc.) is already known by the digital wallet and is pre-filled in the digital wallet checkout window 802. In a preferred embodiment, the user can edit the pre-filled information.

Preferably, the present system also includes methods and apparatus that facilitate the reliable population of HTML forms on Web sites. The end result is that users can identify information content that they wish to provide to sites in a general manner, independent of the actual appearance, labeling, and behaviors of various e-commerce Web sites. Preferably, the present invention includes an "auto-remember" component that allows a user to capture data that is entered and a "form fill" component which includes a powerful set of processes that results from the combination of several different models of sites and users.

The present invention collects information from users, storing it securely and reliably on a server, and then provides it to appropriate form fields under the user's direction. The system maintains mappings of user information to the various HTML form fields of sites that are of interest to the user. This information can then direct how HTML forms are to be filled (or pre-filled) for users who wish to interact with those sites.

With respect to the "auto-remember" feature, prior art digital wallets may implement a remember function, but it must be initiated by the user. With the present "auto-remember" feature, digital wallet users do not need to click a button to remember the form they just filled out because the present system remembers the fields that the user is submitting on a merchant window. When a form is submitted (for example, by pressing a "Submit" button or a "Buy" button), the online wallet responds by determining if the window that triggered the form submission is a merchant window of interest. If so, the wallet suitably remembers the data; otherwise, the wallet can disregard the occurrence of the form submission and continue to run as normal.
The digital wallet controls may include a button labeled "remember", or may also support an automatic remember feature that is always active. In general, fields other than those that are automatically populated by the wallet can be remembered. In this context, remembering a field means that when a user enters data into a specific field, the value will be stored by the system. The wallet component will detect field values entered in this way, and will securely transmit them to a server via the Internet. When a user next goes to this page, the wallet, in addition to populating the form with fields that are retrieved from the wallet system, will also populate the form with values that had previously been remembered. When processing the form (pre-fill), the wallet will securely retrieve field values from the server.

More particularly, with respect to the internet Explorer browser, the invention suitably implements an ActiveX control that attaches itself to a Web page such as, for example, the American Express Online Wallet. In a preferred embodiment, the ActiveX control contains a method that captures the browser events of all Internet Explorer browsers, so that the American Express Online Wallet can respond to these events if necessary by a JavaScript function loaded within the American Express Online Wallet, thereby allowing the system to obtain the completely downloaded document within an Internet Explorer browser. Specifically, this allows the system to capture the "Document Complete" event raised by the Internet Explorer browser which specifies when a document has finished loading. When this event is captured, the ctiveX control notifies the American Express Online Wallet by calling a JavaScript function loaded within the American Express Online Wallet. This function responds to this event by suitably communicating with the ActiveX control to capture the "Form Submit" events for all forms on all Internet Explorer browsers.

When a user fills a form on a Web page and clicks the "Submit" (i.e., any control, such as a button, that submits a form) button for that page, the American Express Online Wallet is notified by the ActiveX control calling a JavaScript function loaded within the American Express Online Wallet. The American Express Online Wallet then suitably determines if the document raising the "Submit" event is of interest by checking the URL of the window that raised the event. If the event is to be handled, the American Express Online Wallet must call a suitable function within the ActiveX control that obtains the document object model (DOM) that raised the event. The DOM can then be traversed and the form values can be saved so that they can be sent to the server for storage in memory. In a preferred embodiment, the ActiveX control must properly detach itself from capturing the browser events and form "Submit" events so that runtime errors are minimized.

With respect to the Netscape browser, because of Netscape's implementation of events, the system captures the event from within JavaScript alone. If the system successfully obtains the "Universal Browser Write" privilege (i.e. granted by the user), the system can then successfully call a function that allows an external window to capture events of another window. The system then can traverse the document object model for all frames of that window. When doing so, the system notifies each form of the window that the system wants to capture the "Submit" event. As such, when a user fills a form on the window that the system notified and clicks the "Submit" button (i.e., any control, such as a button, that submits a form) for that page, the online wallet is notified and suitably responds. One skilled in the art will appreciate that the present invention may be implemented in any suitable transaction system, including, but not limited to any suitable digital wallet system.

With respect to the form fill function, the digital wallet, such as, for example, the American Express Online Wallet, provides a form fill functionality to aid users in populating forms. Prior art systems, such as the system provided by GlobeSet, Inc., typically use a Browser Helper Object (BHO). The BHO approach often includes disadvantages such as, for example, the Internet Explorer 5.0 browser has a bug where it will only load the first BHO specified in the registry. This is a problem for any application since it can't be sure whether its BHO is loaded or not. Moreover, a BHO is loaded for each instance of Internet Explorer such that multiple instances of a BHO could be running at any given time - therefore eating up memory and slowing down navigation for all browsers versus only the one of interest.

The present invention preferably replaces the BHO solution by using the same ActiveX control as specified in the "auto remember" feature. By attaching an ActiveX control to the Online Wallet Web page, the system suitably obtains the document object model for any document loaded within any given internet Explorer browser by using, for example, the Shell Windows API. When a user clicks a "Fill Form" button on the Online Wallet, the wallet can respond by first obtaining the document object model through the ActiveX control. Next, the wallet can save the names of the fields that make up forms and send them to a heuristic engine on the server. The server will respond to this request by returning the values that should be used to fill these fields. The fields can then be filled using the same document object model obtained earlier. As such, the present invention reduces the problem of having to enter repetitive data in forms at Web sites. In addition to saving effort on part of customers, it increases accuracy of the entered data.

More particularly, the architecture of the present invention combines a server-side model of each site (e.g., fields, pages, links, etc.), server-side model of user (e.g., profile), user generated model of site (e.g., macro recording, tagging, drag and drop) model of site manually generated by system (e.g., to augment and validate the user generated models), and heuristically generated model of site (e.g., inference of semantic information about fields, actions, etc.). The present system creates and stores several distinct types of models. The first characterizes the site, for example, how do you check out, how do you add something to a shopping cart, how do you search for a type of product, how do you enter preferences (e.g., travel), etc. The second model characterizes the user, for example, what are the things that a user can do and what are the profile attributes of a user. By combining these two models, the present system creates special processes that add great flexibility and power. The system maps from the model of what a user can do, to the model of the site, wherein the site models are generated by any known method. As such, the site model can be created by the user, by the host, by the transaction card company (issuer) or even by the site provider. In a preferred embodiment, ECML/XML can be used to represent models for the site. In various embodiments site models can be exchanged with other systems.

For example, a user may routinely visit sites of different airlines and travel services in order to purchase airline tickets. Each site typically has fields on different screens for collecting information that are relatively similar between the various sites. However, each site will use different HTML form fields that are placed on different URLs, and which may also change over time. Even though the information is very similar in nature across the different sites, there is presently no common mechanism to automate the process of populating fields for user travel preferences (e.g., seating, meals, travel times, affinity rewards, etc.). Each site may have its own profile of the user which stores much of this information. However, the user would still need to create such a profile for each site independently, given the current practice.

The present invention includes heuristics based field recognition. In this approach, field labels are identified by their spatial proximity to form fields of interest. A combination of field labels and form field HTML attributes (most notably the "name" attribute of the HTML "input", "select", and "action" elements) will be used as input to a heuristic engine that contains a dictionary to aid the identification of desired fields.

In another embodiment, the present invention includes user mediated field recognition. In this approach, the user willfully captures input via a "Remember" button or similar control that allows servers to capture information about the sequence of actions the user executes. When the user does this, he or she can effectively "play back" the actions (similar to macro scripting employed in other software systems). As such, the user's actions can be fed into the heuristic engine and also be fed directly into field mapping tables that are used by the processes of this engine.

In a preferred embodiment, the above two approaches may need some manual interaction in order to completely create process maps and form field maps that accurately depict the navigation and form field completion possibilities that enable this invention. When necessary, human analysts will operate in a fashion similar to what occurs during user mediated field recognition, although they will provide far more information about their navigation and form filling processes than would the typical user. In all cases, the information that is gathered is used to create a process map (or detailed site map) that depicts the sequence of actions (form fill, HTTP Post, HTTP Get, etc.) by which various activities can occur. A field map will also be generated for each of the Web pages in the process map, wherein the field map defines the precise names of fields that can be used to automate form submission. State maps may also be required to track the states of users as they interact with the Web site (the state of the user, such as logged on vs. not logged on, will modify the results of specific actions on the site).

In a preferred embodiment, the process by which the user interacts can either be fully automated (in which case the user merely conveys the desire to perform a scripted action) or can be user mediated (in which case the invention can pre-fill form fields for the user, thereby affording the user the opportunity to correct, change, or complete any fields that require further data entry). In addition to the products and services described above, the enabling technology in the form of the process and field maps can be leveraged for new products and services, such as enabling companies to automate the entry of form data for their site visitors. For example, if a company compiled process and field maps for the benefit of their own customers (by any of the means described above), then the company can also license this information, services, and products to third party customers. The sites for which these maps exist may also use the present invention such that the sites benefit by delivering a similar service to their customers who are not benefiting from the system. The underlying processes themselves will also rely on a system which acquires this information and reformats it, for example, as XML and ECML. These standard representations would form the basis of information exchange for the latter two products/services.

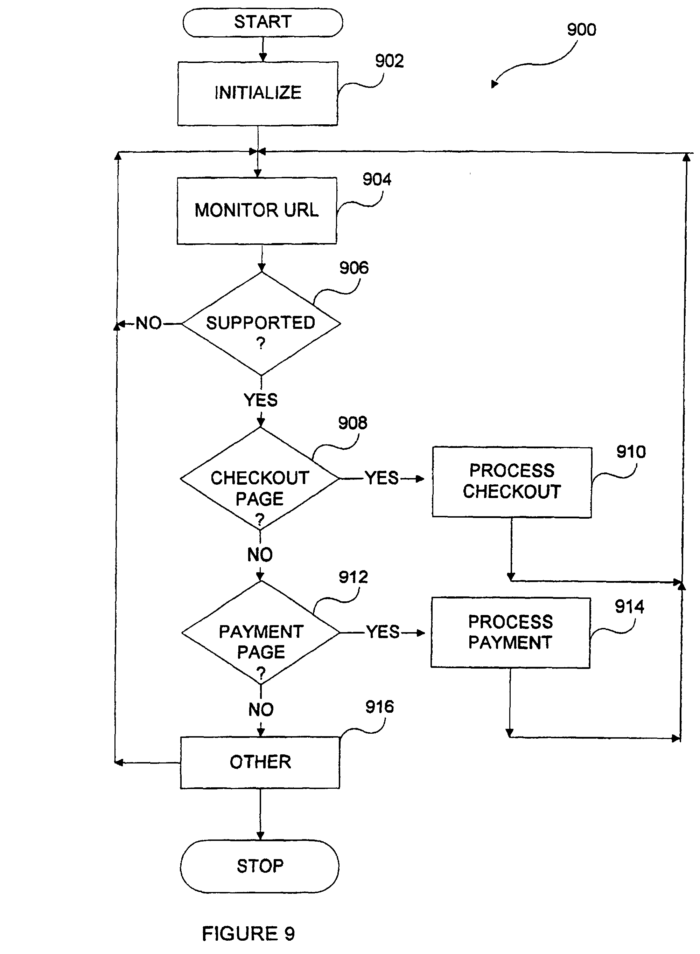

With reference now to **Figure 9,** a process 900 implemented by an exemplary activator program suitably includes initializing the application (step 902), monitoring the uniform resource locator (URL) as the user browses or shops online (step 904), determining whether the user is browsing at a supported site (step 906), determining the type of supported site (steps 908 and 912) and responding appropriately at processing steps 910 and 914 (respectively). Other features (such as coupons, special offers, monitoring, security and the like) may be implemented at step 916.

Initialization step 902 suitably involves opening the activator application and initializing the application as appropriate. The activator application may be initialized in response to system startup, connection to a network (such as the internet or a LAN), or initialization of a browser (such as Internet Explorer, available from the Microsoft Corporation of Redmond, Washington or Netscape Explorer, available from the Netscape Corporation of Mountain View, California). In various embodiments, the activator application may contact the wallet server 140 (Figure 1), wallet application 406 (Figure 4) or another server on network 102. The activator application suitably contacts the remote server to obtain information such as a list of Web sites, domain names, or URLs that are supported by the wallet. This information may be obtained on a regular basis (e.g. daily, weekly, monthly, or at each initialization of the agent application) or when polled by the activator application or the server. In various embodiments, the activator application stores the list of supported URLs in a cache or file on a local drive, or in memory on the client computer.

As the user browses the internet or other data network 102, the activator application suitably monitors the location of the user on the network. One method of monitoring the user's browsing is to monitor the URL used by the user's browser. In such embodiments, the activator application obtains the present URL from the users' browser (or from the system network interface, as appropriate) and compares (step 906) the present URL against the list of supported URLs obtained from the remote server in initialization step 902. These comparisons are shown in logically separate steps 906, 908, 912 and 916 in **Figure 9**, although these steps could be combined or separated in any fashion without departing from the ambit of the invention. For example, although Figure 9 shows multiple comparisons being executed, a single comparison of each present URL against the list of supported URLs may be sufficient in certain embodiments.

If the present URL corresponds to a supported URL, the activator application responds appropriately. For example, if the present URL is a supported checkout page (yes in step 908), the activator application executes a checkout process (step 910). The checkout process may include notifying the user that the checkout page is supported through a pop-up message, or by displaying a particular icon in the system tray or in the floating window. If the wallet client application 214 is not already open, the activator application may present a dialog box or other prompt to the user indicating that the page is supported by the wallet application 214. The prompt may also provide a button or other mechanism by which the user may open the wallet application 214.

If the present URL corresponds to a supported payment page (yes in step 912), the activator application may provide payment instructions to the wallet application, or otherwise pass control to the wallet application (step 914). Messages sent between the activator application, the wallet application, the browser, and the like may be sent by Open Desktop messages, Object Linking and Embedding (OLE) messages, object routine calls, OS calls, or the like.

In various embodiments, the functionality described above is accomplished using cookies as described next. Cookies are used to detect a valid user context. If a valid user context is detected, the activator will either: launch a server application or launch a server toolbar that enables the user to launch other applications. For example, a user's browser might have several cookies that signify the ability to purchase via either a private payment or a specific card product. The activator may launch a toolbar that allows the user to select a desired payment instrument (e.g., from private payments or a card in the user's digital wallet). It will be appreciated that the available applications are not all necessarily related to a purchase transaction. In various embodiments, the context information is stored both on a server and in cookies associated with the browser. For example, the cookies might act as a key by which the context information can be retrieved from the server.

Other functionality (step 916) may also be incorporated into the activator application. For example, security mechanisms (such as those described above and below), customer monitoring functions, coupons, special offers and the like could be implemented. in the case of coupons or special offers, the activator could sense the present URL as corresponding to a particular product or Web page. When the user "surfs" or browses to the particular supported URL, the activator application notices the match and presents the user (via a dialog window, or via the browser, or the like) with a special offer, such as an opportunity to purchase a particular product or to receive a special discount on a purchase. it will be appreciated that other functionality could be incorporated into the activator application without departing from the ambit of the present application.

In various embodiments of the invention, wallet client 214 (**Figure 2**) is pre-filled with information that is specific to the particular user/customer. With reference to **Figure 1**, a user may apply for a digital wallet by contacting a Web server such as wallet server 140 on network 102. The user completes a registration form (which may be generated with CGI scripts, for example) to apply for the wallet. Wallet server 140 suitably receives demographic, account and other information (e.g. address, shipping address, name, credit card number, and the like) from authentication server 306 (**Figure 3**) or another server on a private network. This information may be used to configure a wallet client 214 (**Figure 2**) that is unique to the particular user. One method of configuring the wallet client 214 is to create a configuration file that is associated with client 214 and that is read by client 214 to obtain wallet information as described above.

Preferably, the registration information also includes card reader information which includes whether the card reader port should be serial or USB port. If the wallet application is approved, a card reader may be shipped or otherwise provided to the user, and a special code (such as a cryptographic key, or a password, or any other sort of electronic or printed code) is also provided to the user. The user then registers for online wallet service by electronically contacting wallet server 140 and authenticating to the server with the card and/or with the special code. After providing the special code, the user receives a specially configured copy of the wallet software, which may be installed on customer computer 110, as appropriate. The wallet pre-fill procedure may be used with any credit card or charge card by simply associating a version of the wallet program with a special code. Configuration information for a particular user is associated with a code that is provided to the user, who may later present the special code to authenticate him/herself with wallet server 140 to obtain a copy of the wallet that has already been pre-configured with data specific to the particular user.

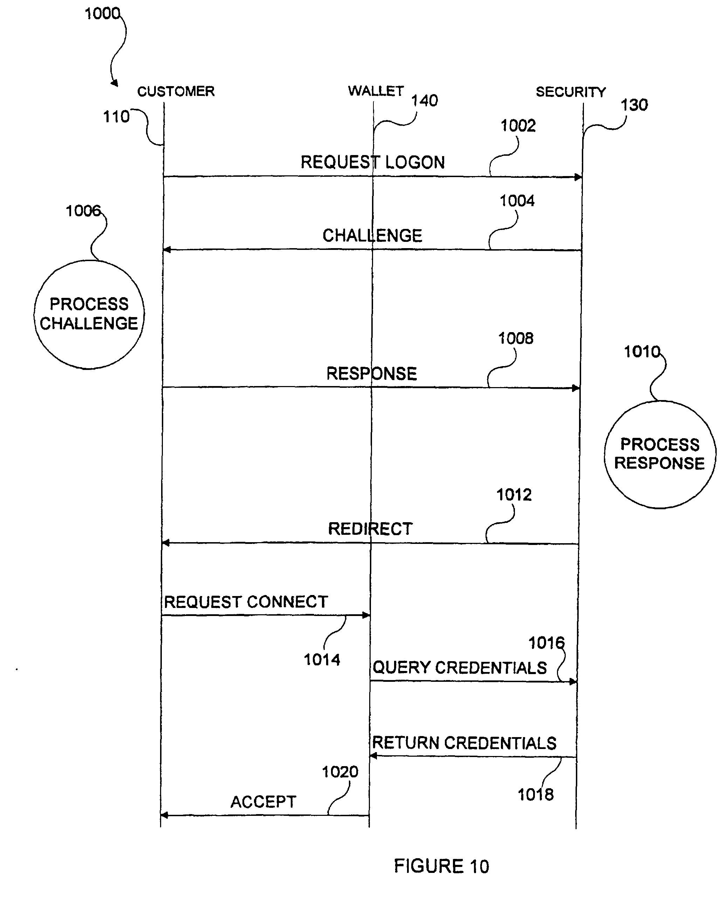

With primary reference now to **Figures 1** and **10,** customer 110 suitably initiates a transaction by logging in to wallet server 140 using smartcard 202. To log in to the wallet server 140, customer 110 first may connect to the security server 130 via browser 216. The user selects a particular uniform resource locator (URL) for the login page through a bookmark, an internet shortcut, a hyperlink, or any other suitable technique. Security server 130 may then return a login page via network interface 302. In various embodiments, a form entry and submission button for user/password login and a hypertext link for smartcard login are provided as part of the login page. The user selects smartcard login, and browser 216 suitably responds by forwarding log on request message 1002 (**Figure 10**). Security server 130 receives logon request 1002 and initiates the smartcard logon process as appropriate. In various embodiments, security server 130 formats a cryptographic challenge by authorization server 306 or security engine 304 in response to logon request message 1002. Cryptographic challenge 1004 is any sort of challenge message that prevents replay attacks (e.g., fraudulent messages created by re-sending previously sent authentication packets), such as a challenge that is based upon random data and is designed to solicit a response from the X.509 application stored on smartcard 202. The challenge is then suitably provided to customer 110 via network 102 as challenge message 1004.

Upon receipt of challenge message 1004, browser 216 suitably passes message 1004 to wallet client 214 for processing with smartcard 202. If wallet client 214 is not running, browser 216 may automatically open the program. Wallet client 214 then prepares the signature response, as appropriate. For example, wallet client 214 may extract the server challenge information, format a new client challenge (i.e., a second cryptographic challenge for smartcard 202), combine both challenges into a dual challenge, and compute a hash of the dual challenge for later use, for example, in a Public-Key Cryptography System 1 (PKCS1) cryptographic block. The hash may be computed according to any algorithm such as MD3 or MD4, for example, and is suitably used to guarantee the completeness and accuracy of the data in the dual challenge block. It will be understood that PKCS1 is a public key cryptography standard defining mechanisms for encrypting and signing data using RSA public-key cryptosystems. The PKCS standard is fully defined in PKCS #1: RSA Cryptography Specifications Version 2.0 dated September 1998 (available online from http://www.rsa.com/rsalabs/pubs/PKCS/html/pkcs-1html),

The PKCS1 block is suitably provided to smartcard 202 via reader 204 for processing (step 1006 in Figure 10). In various embodiments, card reader 204 interacts with customer computer 110 to prompt the user for a personal identifier, for example a personal identification number (PIN) or other unique identifier, to access the card. In a preferred embodiment, a PIN is stored on smartcard 202. Alternatively, a PIN or other personal identifier may be stored elsewhere on the system, for example, on the reader 204 or the customer computer 110. The user suitably enters the personal identifier as appropriate to unlock smartcard 202, which receives the dual challenge block from wallet client 214 and digitally signs the block as appropriate. In various embodiments, smartcard 202 contains a private key that is used to compute a digital signature of the block. The signed block is then returned to wallet client 214, as appropriate. In various embodiments, smartcard 202 also provides a certificate (such as an X.509 certificate) that corresponds to the private key used to compute the digital signature.

After receiving the signature and certificate from smartcard 202, wallet client 214 suitably creates an appropriate response message 1008 to be sent to security server 130. Although response message 1008 may be in any format, various embodiments format response message 1008 as a PKCS7 message as defined in PKCS #7: Cryptographic Message Syntax Standard, An RSA Laboratories Technical Note, Version 1.5, Revised November 1, 1993, available online from ftp://ftp.rsa.com/pub/pkcs/doc/pkcs-7.doc.

After receiving response message 1008, security server 130 processes the message as appropriate (step 1010 in **Figure 10).** In various embodiments, response message 1008 is routed to authorization server 306, which verifies the certificate and signature provided by smartcard 202. Upon successful verification of the certification and validation of the signature, in various embodiments a security token may be generated and returned to the customer 110 or smartcard 202.

In this manner, subsequent presentation of the Security token provides a means for the user to establish identity and securely interact with the wallet server. In various embodiments, authorization server 306 may also create an additional security token that identifies the user. In various embodiments this token may consist of multiple portions which can then map to an appropriate digital certificate, smart card, or other data, possibly utilizing data in database 310. In various embodiments, the additional security token and/or portions therein may be provided to customer 110 in conjunction with redirect message 1012. In various embodiments, the additional security token may be provided to the customer or maintained on authorization server 306.

Upon receipt of redirect message 1012, customer 110 suitably contacts wallet server 140 to request a connection. In various embodiments "Request connect" message 1014 suitably includes the security token and possibly the additional security token in entirety or part as part of redirect message 1012. Wallet server 140 queries the security server 130 using some combination of security tokens in whole or part to obtain identification of customer 110. The query 1016 and response 1018 are suitably transmitted across network 150, which in some embodiments is maintained separate from network 102 to enhance the security of the system 100. An alternative embodiment employs network 102 that in some embodiments affords enhanced security by Virtual Private Network, SSL protocol, use of shared secrets, and/or other cryptographic means. If the return credentials 1018 are in order, wallet server 140 retrieves the attributes corresponding to customer 110 from wallet database 408 and notifies customer 110 of a successful login via message 1020. It will be appreciated that alternate embodiments of a logon sequence are possible. It will also be appreciated that any sort of encryption schemes, message formats and the like could be used to implement a login sequence 1000.

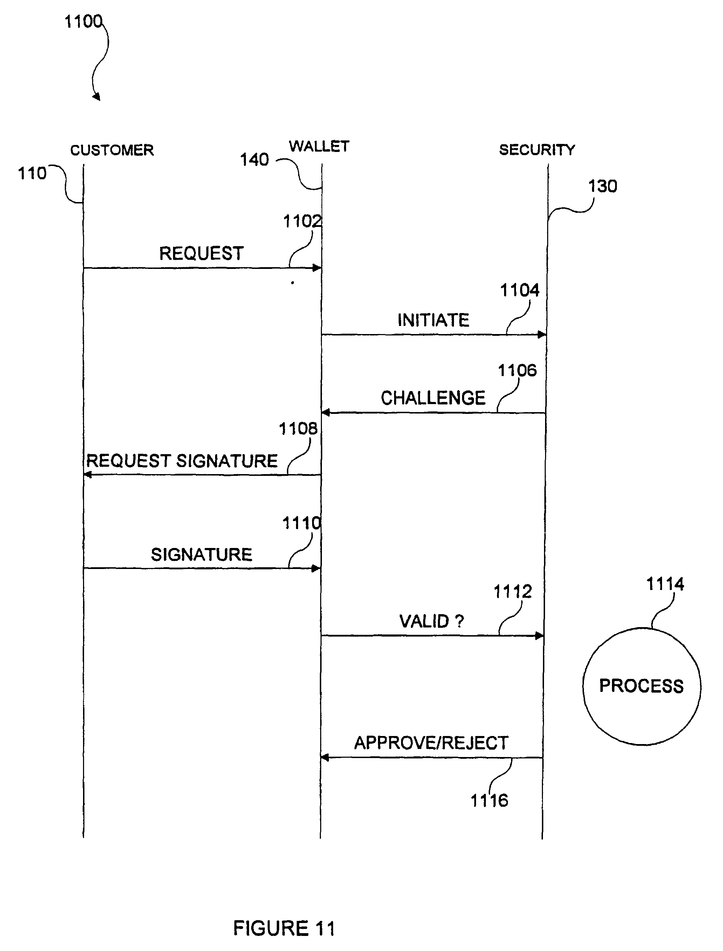

Referring now to **Figure 11,** an exemplary authentication flow 1100 suitable for use during a purchase transaction begins with a customer 110 placing a request 1102 with wallet server 140 for an event (such as a purchase) for which authentication is required. Wallet server 140 suitably recognizes the event and submits a request message 1104 to the security server 130, for example, via communication channel 150, to format a challenge message. Authentication server 306 (or some other component of security server 130, as appropriate) then formats a challenge message 1106 (which may include random data) and provides the challenge message 1106 to wallet server 140, for example, via connection 150. Wallet server 140 receives the challenge message 1106 and forwards the challenge data to browser 216 as signature request message 1108. Browser 216 opens wallet client 214, if necessary, and forwards signature request message 1108. As described above, wallet client 214 formats a signature request block such as a PKCS1 block including a server challenge, a client challenge and a hash. The resultant signature request block is provided to smartcard 202 via reader 204. Smartcard 202 suitably signs the block and provides a copy of its X.509 certificate, as appropriate.

The signed block may then be returned to wallet client 214, which suitably formats an appropriate signature response message 1110 (such as a PKCS7 message) and sends it to wallet server 140. Wallet server 140 then formulates validity check message 1112, which includes data from signature response message 1110 and the security token associated with customer 110 during the logon process (such as the exemplary logon process shown in **Figure 10).** In alternate embodiments, the security token provided is received from customer 110 as part of signature response message 1110. Validity check message 1112 is sent to security server 130 via connection 150, as appropriate. Security server 130 may then route validity check message to authorization server 306, as appropriate, which may check the signature and retrieve the appropriate security token from database 310 (step 1114 in **Figure 11).** The security token and/or optional unique identification code retrieved from the database is then compared to the security token or ID received from the wallet server 140. If the two objects (e.g., security tokens or IDs) match, it can be deduced that the card presently used by customer 110 is the same card used by customer 110 at the time of log on. An appropriate approve or reject message 1116 is then sent from security server 130 to wallet server 140, and the transaction is allowed to proceed.

In various embodiments, wallet server 140 acts as a proxy for customer 110 during transactions. For example, wallet server 140 may complete purchase forms including shipping address, card number, and the like on behalf of purchaser 110. Merchant 120 may then authorize the purchase transaction as a standard charge card transaction using conventional hardware and software. It will be realized, however, that the added security provided by the systems disclosed herein will allow added confidence in the identity of the purchaser, thus justifying a lower discount rate for the transaction.

Various embodiments of the invention incorporate an added protection against security breaches. Because many server-side functions incorporated into security server 130 or wallet server 140, for example, may incorporate various scripting components written in scripting languages such as JavaScript (as defined by Sun Microsystems of Mountain View, California) or VBscript (as defined by the Microsoft Corporation of Redmond, Washington), servers coupled to network 102 may provide various functionality to the multiple clients 110 through such server languages by providing scripts (or code) from the server to the client. The code is interpreted, compiled or otherwise executed by client computer 110. In embodiments incorporating JavaScript, for example, scripts are interpreted and executed by a browser program (e.g. Internet Explorer, Netscape Communicator or the like) running on client computer 110. Other embodiments include other non-PC browsers, for example Wireless Application Protocol (WAP) phones that support Wireless Markup Language(WML) scripts. The various scripting languages may contain instructions, objects or other data mechanisms for accessing files on the user's hard drive, for example, or for otherwise manipulating data on the user's computer. To prevent unauthorized sources from providing executable code to the user, the scripting languages may include a mechanism for allowing the user to approve scripts provided only from trusted sources. For example, a user conducting an electronic transaction as described above may allow scripts provided from the wallet server to execute, but may prevent other scripts provided by other sources from executing on the user's computer.

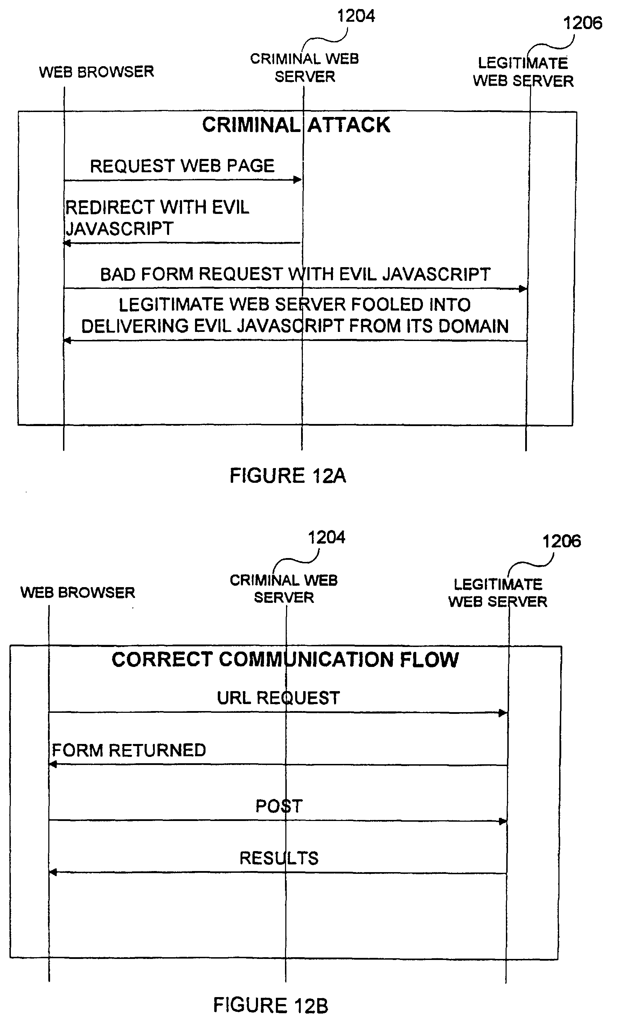

A potential security problem encountered with many scripting languages is shown in **Figure 12A**. An unscrupulous "cracker" may create a Web site 1204 that is designed to perform malicious activities against users of a legitimate Web server 1206. The cracker site 1204 (shown as the "criminal site" in the figure) may, for example, provide a portion of code, such as a script, to the user. The criminal site 1204 may also induce the user's Web browser 216 to request a particular uniform resource locator (URL) at the legitimate server 1206 (such as the wallet server 140, or any other server on network 102). The referenced URL may be deliberately crafted such that the legitimate server 1206, returns, for example, an error message or other response to the client browser 216. In various embodiments, the response from the legitimate server 1206 may automatically include a portion or variation of the request from the user's Web browser 216. If that response includes JavaScript, VBscript or other code generated as a result of the malicious intent of the criminal site 1204, then the code may be executed on the user's computer. This example illustrates one of many techniques in which a "cracker" may induce a legitimate Web server 1206 to send malicious instructions to a user's Web browser 216. Because the various coding and scripting languages contain instructions for accessing the host computer's file system, registry, or the like, it will be understood that the unauthorized execution of such code is highly undesirable. Nevertheless, the technique shown in **Figure 12A** may allow scripting or other code from a criminal site 1204 to be provided to a user's computer. Because the users' computer thinks that the scripting came from a trusted source (i.e. the wallet server), the client's computer may execute the code from the criminal site, thus creating the potential for damage, unauthorized data dissemination or destruction, or the like. **Figure 12B** illustrates the correct communication flow that should occur (as opposed to the criminal attack flow shown in **Figure 12A).**

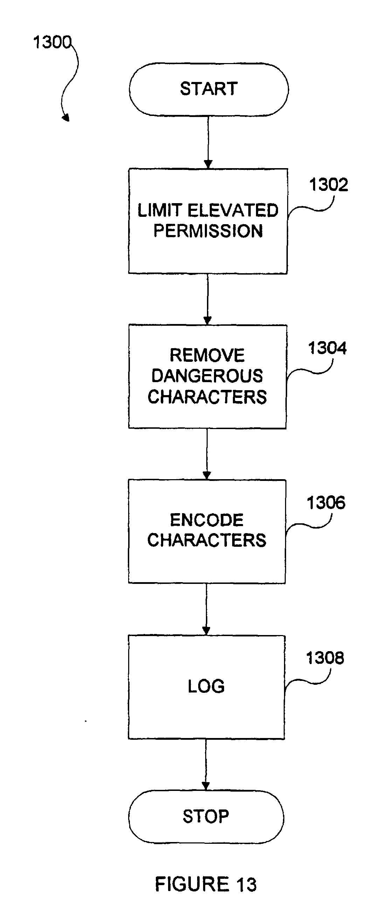

To prevent this potential security problem, various embodiments of the invention suitably include techniques for reducing or eliminating undesired executable code. With reference to Figure 13, a process 1300 for reducing the likelihood of script attacks suitably includes the steps of limiting the portions of the server having elevated permission (step 1302), removing dangerous characters within that portion of the site (step 1304), encoding certain characters where necessary (step 1306), and optionally logging data that is provided to users from the relevant portion of the Web site (step 1308).

With regard to step 1302, a Web site typically includes various pages, each page having a unique URL. Users of the site may place elevated trust in certain servers (such as those corresponding to financial institutions or merchants who are reputable). By restricting the elevated trust to only a portion of the Web site (e.g., a limited subset of URLs corresponding to the trusted Web site), the level of trust afforded to the rest of the site is suitably reduced and security is enhanced. Trust may be restricted to a limited portion of the site by configuring the user's Web browser to trust only a portion of the site, for example. The user's Web browser may be configured manually or by a configuration script provided by a wallet server, for example. When only certain pages (e.g. a portion) of the Web site are enabled with heightened trust, any scripts included in references to other pages will either not be executed or will not be executed with heightened trust.

In addition to (or as an alternative to) configuring the client such that the client only "trusts" a certain portion of the server, the server may be configured to improve the security of the client-server interaction. For example, scripting with heightened trust may be disallowed on most of the server to improve security. Moreover, data provided to the trusted portion of the Web site may be monitored and/or modified before being returned to the user (steps 1304 and 1306). Most scripting languages require certain characters for formatting commands. For example, the JavaScript language is frequently encoded with script instructions placed between angle brackets ("<" and ">"). Hence, the angle brackets may be removed from any content that will be returned by a trusted portion of the Web site. If a Web page provided from a trusted portion of the Web site were to include a "criminal" JavaScript program attempting to use angle brackets, for example, the script instructions would not execute on the user's computer because the script instructions would not be properly formatted after removing the angle brackets. Alternatively, certain "dangerous" characters (such as the angle brackets in JavaScript) may be returned in an alternate format, for example, in "ampersand notation" with an ampersand ("&") and an American Standard Code for Information Interchange (ASCII) value for the particular character, or by replacing the "dangerous" character with a safe character, such as the "space" character (step 1306). It will be appreciated that any characters could be eliminated or encoded in various embodiments of the invention depending upon the particular languages, scripting environments, and the like that may be utilized.

In various embodiments, an optional step 1308 suitably includes maintaining a data log of information provided by the various portions of the Web site. All content in which characters have been encoded or removed can be logged so that the log can be reviewed to determine if the Web site is being used to compromise a network client. For example, all content provided from the Web page, all content provided from within the trusted portion, all content having scripting/programming content, all content from outside the trusted portion, or any other part of the Web site content could be logged into one or more datafiles. The datafiles may be suitably searched or otherwise consulted to determine whether there have been attempts to provide unauthorized content to users by the server.

In some cases internal machines can be attacked by a "criminal" site sending content that contains script to a network server that can log the content in audit trail (e.g., log) files. Given that a browser may have been configured a heightened trust for files residing on the server, in various embodiments, when a user reviews the audit trail files of Web and other e-commerce servers by using the browser, a script may be executed on the network client with the trust level, of the network server that delivered the audit trail records (e.g., with a heightened trust level). Execution of this script may cause an attack which may occur long after the script was sent to the network server. This attack is preventable using the same methods and procedures described above to prevent cross site scripting, such as the "criminal" attacks described above. A filter, such as the one described in **Figure 13**, running on a network server, such as a Web server, or running on a network client, such as a PC browser, can filter for script control characters and encode the characters reject the characters or reject the entire record.

The scope of the invention should be determined by the allowed claims rather than by the examples given above.

## Claims

1. A method of operating computer apparatus for conducting a transaction, the method comprising:
a. receiving a transaction request ( 1002;1102) from a user at a server (140;130);
b. issuing a challenge (1004;1106,1108) to the user;
c. receiving a response (1008; 1110, 1112) from the user based upon said challenge;
d. processing said response to verify the user (1010;1114);
e. assembling credentials for the transaction, said credentials comprising at least one key;
f. providing at least a portion of said credentials to said user (1012);
g. receiving a second request (1014; 1110) from said user, said second request including said portion of said credentials; and
h. validating (1016,1018;1112,1116) said.portion of said credentials with said key to provide access to a transaction service.

2. The method of Claim 1, wherein the transaction is an electronic purchase transaction.

3. The method of Claim 2, wherein the electronic purchase transaction is conducted using a digital wallet (140;214).

4. The method of Claim 1, 2 or 3 wherein the user conducts the transaction via a smartcard (202).

5. A transaction system (100) for facilitating a financial transaction requested by a user operating a user computer (110) on a data network (102), the system comprising:
a. a transaction authorizer (120); and
b. a security server (130) configured to verify that an intelligent token is in the user's possession and to provide a digital credential to said user computer if said verification is successful;
wherein said transaction authorizer (120) is configured to authorize a transaction requested by said user based at least in part upon said digital credential provided by said user computer via said data network (102).

6. The transaction system of Claim 5, further comprising a transaction tool server.

7. The transaction system of Claim 5 or 6 further comprising a wallet server (140) in communication with said user computer (110) via said digital network (102).

8. The transaction system of Claim 7 wherein said wallet server (140) is configured to receive a request (1102) for a transaction from said user computer (110) to contact a merchant computer system (120) and to provide information about said user (110) to said merchant computer system.

9. The transaction system of any of Claims 5-8 , wherein the user computer (110) comprises a transaction tool and a reader (204), wherein said reader is configured to transfer information between the transaction tool and the intelligent token.

10. The transaction system of Claim 9, wherein said transaction tool is a wallet client (214).

11. The transaction system of any of Claims 5-10, wherein the intelligent token is a smartcard (202).

12. The transaction system of any of Claims 5-11, wherein the connection between said security server (130) and said transaction authorizer computer (120) is through a data connection (152) separate from said data network (102).

13. The transaction system of Claim 9, wherein said transaction tool communicates with said security server (130) via a data connection (150) separate from said data network (102).

14. The transaction system of any of Claims 5-13, wherein the intelligent token comprises a digital certificate that uniquely identifies the user associated with the intelligent token.

15. The transaction system of Claim 14, wherein the user of said intelligent token unlocks access to the digital certificate by use of a personal identifier.

16. The transaction system of any of Claims 5-15, wherein the intelligent token is issued by an issuer and wherein a transaction made using said transaction system is considered a "card present" transaction as deemed by the issuer of the intelligent token.

17. A computer-implemented method for facilitating access to a service, the method comprising the steps of:
receiving a logon request (1002) from a user;
verifying that said user is in possession of a token (1004,1006,1008,1010);
providing a credential to said user if said verification is successful (1012);
receiving a transaction request from a user (1014), said transaction request comprising at least a part of said credential; and
processing said at least a part of said credential to provide access to said service (1016,1018).

18. The method of claim 17 wherein said verification step comprises a challenge-response.

19. The method of Claim 18 wherein said challenge-response comprises random data provided to said token.

20. The method of Claim 19 wherein said challenge-response further comprises a digital signature of said random data.

21. The method of any of Claims 17-20 wherein said service is a financial transaction.

## Patentansprüche

1. Ein Verfahren zum Bedienen einer Computervorrichtung zum Durchführen einer Transaktion, wobei das Verfahren Folgendes beinhaltet:
a. Empfangen einer Transaktionsanfrage (1002; 1102) von einem Anwender an einem Server (140; 130);
b. Ausgeben einer Abfrage (1004; 1106, 1108) an den Anwender;
c. Empfangen einer Antwort (1008; 1110, 1112) vom Anwender basierend auf der Abfrage;
d. Verarbeiten der Antwort, um den Anwender zu überprüfen (1010; 1114);
e. Assemblieren von Berechtigungsnachweisen für die Transaktion, wobei die Berechtigungsnachweise mindestens einen Schlüssel beinhalten;
f. Versorgen des Anwenders (1012) mit mindestens einem Anteil der Berechtigungsnachweise;
g. Empfangen einer zweiten Anfrage (1014; 1110) vom Anwender, wobei die zweite Anfrage einen Anteil der Berechtigungsnachweise umfasst; und
h. Validieren (1016,1018; 1112, 1116) des Anteils der Berechtigungsnachweise mit dem Schlüssel, um Zugang zu einem Transaktionsdienst bereitzustellen.

2. Verfahren gemäß Anspruch 1, wobei die Transaktion eine elektronische Einkaufstransaktion ist.

3. Verfahren gemäß Anspruch 2, wobei die elektronische Einkaufstransaktion durchgeführt wird, indem eine digitale Brieftasche (140; 214) verwendet wird.

4. Verfahren gemäß Anspruch 1, 2 oder 3, wobei das Mittel eine Chip-Karte (202) ist.

5. Ein Transaktionssystem (100) zum Vereinfachen einer finanziellen Transaktion, die auf einem Datennetz (102) von einem Anwender, der einen Anwendercomputer (110) bedient, erfragt wird, wobei das System Folgendes beinhaltet:
a. einen Transaktionsautorisierer (120); und
b. einen Sicherheitsserver (130), der konfiguriert ist, um zu überprüfen, dass der Anwender eine intelligente Berechtigungsmarke besitzt, und um den Anwendercomputer mit einem digitalen Berechtigungsnachweis zu versorgen, wenn diese Überprüfung erfolgreich ist;
wobei der Transaktionsautorisierer (120) konfiguriert ist, um eine vom Anwender erfragte Transaktion mindestens teilweise auf der Basis des digitalen Berechtigungsnachweises, der von dem Anwendercomputer über das Datennetz (102) bereitgestellt wird, zu autorisieren.

6. Transaktionssystem gemäß Anspruch 5, das ferner einen Transaktionstoolserver beinhaltet.

7. Transaktionssystem gemäß Anspruch 5 oder 6, das ferner einen Brieftaschenserver (140), der über das digitale Netz (102) mit dem Anwendercomputer (110) kommuniziert, beinhaltet.

8. Transaktionsystem gemäß Anspruch 7, wobei der Brieftaschenserver (140) konfiguriert ist, um eine Anfrage (1102) nach einer Transaktion vom Anwendercomputer (110) zu empfangen, um ein Händlercomputersystem (120) zu kontaktieren und das Händlercomputersystem mit Informationen über den Anwender (110) zu versorgen.

9. Transaktionssystem gemäß einem der Ansprüche 5 - 8, wobei der Anwendercomputer (110) ein Transaktionstool und einen Leser (204) beinhaltet, wobei der Leser konfiguriert ist, um Informationen zwischen dem Transaktionstool und der intelligenten Berechtigungsmarke zu übertragen.

10. Transaktionssystem gemäß Anspruch 9, wobei das Transaktionstool ein Brieftaschenkunde (214) ist.

11. Transaktionssystem gemäß einem der Ansprüche 5 - 10, wobei die intelligente Berechtigungsmarke eine Chip-Karte (202) ist.

12. Transaktionssystem gemäß einem der Ansprüche 5 - 11, wobei die Verbindung zwischen dem Sicherheitsserver (130) und dem Transaktionsautorisierercomputer (120) durch eine vom Datennetz (102) separate Datenverbindung (152) erfolgt.

13. Transaktionssystem gemäß Anspruch 9, wobei das Transaktionstool mit dem Sicherheitsserver (130) über eine vom Datennetz (102) separate Datenverbindung (150) kommuniziert.

14. Transaktionssystem gemäß einem der Ansprüche 5 -14, wobei die intelligente Berechtigungsmarke ein digitales Zertifikat beinhaltet, das den der intelligenten Berechtigungsmarke zugeordneten Anwender eindeutig kennzeichnet.

15. Transaktionssystem gemäß Anspruch 14, wobei der Anwender der intelligenten Berechtigungsmarke durch einen persönlichen Kennzeichner den Zugang zum digitalen Zertifikat freischaltet.

16. Transaktionssystem gemäß einem der Ansprüche 5 - 15, wobei die intelligente Berechtigungsmarke von einem Ausgeber ausgegeben wird und wobei eine unter Verwendung des Transaktionssystems ausgeführte Transaktion als eine "Card-Present"-Transaktion betrachtet wird, wie es von dem Ausgeber der intelligenten Berechtigungsmarke angesehen wird.

17. Ein im Computer eingesetztes Verfahren zum Vereinfachen des Zugangs zu einem Dienst, wobei das Verfahren folgende Schritte beinhaltet:
Empfangen einer Einlog-Anfrage (1002) von einem Anwender;
Überprüfen, dass der Anwender eine Berechtigungsmarke besitzt (1004,1006,1008, 1010);
Versorgen des Anwenders mit einem Berechtigungsnachweis, wenn die Überprüfung erfolgreich ist (1012);
Empfangen einer Transaktionsanfrage von einem Anwender (1014), wobei die Transaktionsanfrage mindestens einen Teil des Berechtigungsnachweises beinhaltet; und
Verarbeiten des mindestens einen Teils des Berechtigungsnachweises, um Zugang zu dem Dienst (1016, 1018) bereitzustellen.

18. Verfahren gemäß Anspruch 17, wobei der Überprüfungsschritt eine Abfrageantwort beinhaltet.

19. Verfahren gemäß Anspruch 18, wobei die Abfrageantwort der Berechtigungsmarke breitgestellte Zufallsdaten beinhaltet.

20. Verfahren gemäß Anspruch 19, wobei die Abfrageantwort ferner eine digitale Signatur der Zufallsdaten beinhaltet.

21. Verfahren gemäß einem der Ansprüche 43 - 46, wobei der Dienst eine finanzielle Transaktion ist.

## Revendications

1. Un procédé d'opération d'un appareil informatique pour mener une transaction, le procédé comportant :
a. recevoir, à un serveur (140 ; 130), une demande de transaction (1002 ; 1102) d'un utilisateur;
b. émettre un défi (1004 ; 1106,1108) à l'intention de l'utilisateur ;
c. recevoir une réponse (1008 ; 1110,1112) de l'utilisateur basée sur ledit défi ;
d. traiter ladite réponse pour vérifier l'utilisateur (1010 ; 1114) ;
e. assembler des références pour la transaction, lesdites références comportant au moins une clef ;
f. fournir au moins une portion desdites références audit utilisateur (1012) ;
g. recevoir une deuxième demande (1014 ; 1110) dudit utilisateur, ladite deuxième demande comprenant ladite portion desdites références ; et
h. valider (1016,1018 ; 1112, 1116) ladite portion desdites références avec ladite clef pour fournir l'accès à un service de transaction.

2. Le procédé de la revendication 1, dans lequel la transaction est une transaction d'achat électronique.

3. Le procédé de la revendication 2, dans lequel la transaction d'achat électronique est menée à l'aide d'un portefeuille numérique (140 ; 214).

4. Le procédé de la revendication 1, la revendication 2 ou la revendication 3 dans lequel l'instrument est une carte à puce (202).

5. Un système de transaction (100) pour faciliter une transaction financière demandée par un utilisateur opérant un ordinateur utilisateur (110) sur un réseau de données (102), le système comportant :
a. un autorisateur de transaction (120) ; et
b. un serveur de sécurité (130) configuré pour vérifier que l'utilisateur est en possession d'un jeton intelligent et pour fournir une référence numérique audit ordinateur utilisateur si ladite vérification est réussie ;
dans lequel ledit autorisateur de transaction (120) est configuré pour autoriser une transaction demandée par ledit utilisateur basée au moins en partie sur ladite référence numérique fournie par ledit ordinateur utilisateur via ledit réseau de données (102).

6. Le système de transaction de la revendication 5, comportant de plus un serveur outil de transaction.

7. Le système de transaction de la revendication 5 ou la revendication 6 comportant de plus un serveur portefeuille (140) en communication avec ledit ordinateur utilisateur (110) via ledit réseau numérique (102).

8. Le système de transaction de la revendication 7 dans lequel ledit serveur portefeuille (140) est configuré pour recevoir une demande (1102) pour une transaction dudit ordinateur utilisateur (110) pour contacter un système informatique commercial (120) et pour fournir des informations sur ledit utilisateur (110) audit système informatique commercial.

9. Le système de transaction de n'importe lesquelles des revendications 5 à 8, dans lequel l'ordinateur utilisateur (110) comporte un outil de transaction et un lecteur (204), dans lequel ledit lecteur est configuré pour transférer des informations entre l'outil de transaction et le jeton intelligent.

10. Le système de transaction de la revendication 9, dans lequel ledit outil de transaction est un client portefeuille (214).

11. Le système de transaction de n'importe lesquelles des revendications 5 à 10, dans lequel le jeton intelligent est une carte à puce (202).

12. Le système de transaction de n'importe lesquelles des revendications 5 à 11, dans lequel la connexion entre ledit serveur de sécurité (130) et ledit ordinateur autorisateur de transaction (120) se fait par le biais d'une connexion de données (152) distincte dudit réseau de données (102).

13. Le système de transaction de la revendication 9, dans lequel ledit outil de transaction communique avec ledit serveur de sécurité (130) via une connexion de données (150) distincte dudit réseau de données (102).

14. Le système de transaction de n'importe lesquelles des revendications 5 à 14, dans lequel le jeton intelligent comporte un certificat numérique qui identifie de façon unique l'utilisateur associé au jeton intelligent.

15. Le système de transaction de la revendication 14, dans lequel l'utilisateur dudit jeton intelligent déverrouille l'accès au certificat numérique en utilisant un identificateur personnel.

16. Le système de transaction de n'importe lesquelles des revendications 5 à 15, dans lequel le jeton intelligent est émis par un émetteur et dans lequel une transaction faite à l'aide dudit système de transaction est considérée comme étant une transaction "avec carte présente" telle que jugée par l'émetteur du jeton intelligent.

17. Un procédé mis en l'oeuvre par ordinateur pour faciliter l'accès à un service, le procédé comportant les étapes de :
recevoir une demande d'ouverture de session (1002) d'un utilisateur ;
vérifier que ledit utilisateur est en possession d'un jeton (1004, 1006,1008,1010);
fournir une référence audit utilisateur si ladite vérification est réussie (1012) ;
recevoir une demande de transaction d'un utilisateur (1014), ladite demande de transaction comportant au moins une partie de ladite référence ; et
traiter cette dite partie au moins de ladite référence pour fournir l'accès audit service (1016, 1018).

18. Le procédé de la revendication 17 dans lequel ladite étape de vérification comporte une réponse-défi.

19. Le procédé de la revendication 18 dans lequel ladite réponse-défi comporte des données aléatoires fournies audit jeton.

20. Le procédé de la revendication 19 dans lequel ladite réponse-défi comporte de plus une signature numérique desdites données aléatoires.

21. Le procédé de n'importe lesquelles des revendications 43 à 46 dans lequel ledit service est une transaction financière.
